# EUROPEAN PATENT APPLICATION

(11) **EP 4 836 435 A1**
(43) Date of publication of application: **04.11.2026**
(21) Application number: 24915798.3
(22) Date of filing: 25.10.2024
(51) Int. Cl.: H04N 25/11, H04N 25/46, H04N 23/951, H04N 23/62, H04N 23/667, H04N 23/63

(54) **ELECTRONIC DEVICE COMPRISING CAMERA, AND OPERATING METHOD THEREFOR**

(30) Priority: 03.01.2024 KR 20240000705; 18.01.2024 KR 20240008182
(71) Applicant: Samsung Electronics Co., Ltd., Suwon-si, Gyeonggi-do 16677 (KR)
(72) Inventor: PARK, Junghyun, Suwon-si Gyeonggi-do 16677 (KR); LEE, Haegeun, Suwon-si Gyeonggi-do 16677 (KR); CHO, Junki, Suwon-si Gyeonggi-do 16677 (KR); KIM, Daehun, Suwon-si Gyeonggi-do 16677 (KR); KIM, Seunghun, Suwon-si Gyeonggi-do 16677 (KR); KIM, Jonghyun, Suwon-si Gyeonggi-do 16677 (KR); PARK, Dubok, Suwon-si Gyeonggi-do 16677 (KR)
(74) Representative: Nederlandsch Octrooibureau
(86) International application number: PCT/KR2024/016430
(87) International publication number: WO 2025/146909

(57) **Abstract**

An electronic device of the disclosed embodiments may include a memory and a camera. The electronic device may be configured to process a non-Bayer pattern image signal by using an image signal processor (ISP) designed to process a Bayer pattern image signal.

## Description

### [Technical Field]

The disclosure relates to an electronic device including a camera, and a method of operating the electronic device.

### [Background Art]

With the development of digital technologies, various types of electronic devices, such as a mobile communication terminal, a Personal Digital Assistant (PDA), an electronic organizer, a smartphone, a tablet Personal Computer (PC), or a wearable device, are widely used. The electronic devices may provide various functions. For example, the electronic devices may execute at least one application in foreground and/or background to provide at least one function.

The electronic device may provide the various functions by using a designated operating system (e.g., Android^{™} operating system). For example, the electronic device may support a plurality of functions provided by using a camera.

The aforementioned content may be provided as background technologies for aiding understanding of the disclosure. No claim or decision is made as to whether the aforementioned content is applicable as the prior art related to the disclosure.

### [Disclosure of Invention]

### [Solution to Problem]

An electronic device according to an embodiment may include a color filter array including a first color pattern, an image sensor configured to generate an image signal by using light passing through the color filter array, an image signal processor configured to process an image signal composed of a second color pattern, a display, a memory configured to store instructions, and a processor configured to execute instructions. The electronic device may receive a user input related to acquisition of a capture image. The electronic device may obtain a first image signal of a first frame composed of the first color pattern through the image sensor, based on the user input. The electronic device may convert the first image signal of the first frame into a second image signal of the first frame composed of the second color pattern. The electronic device may obtain first draft image data by applying the second image signal of the first frame to the image signal processor. The electronic device may obtain first capture image data by demosaicking the first image signal of the first frame. The electronic device may replace the first draft image data with the first capture image data.

A method of operating an electronic device according to an embodiment may be a method of operating an electronic device including a color filter array including a first color pattern, an image sensor configured to generate an image signal by using light passing through the color filter array, and an image signal processor configured to process an image signal composed of a second color pattern. The method of operating the electronic device may include receiving a user input related to acquisition of a capture image. The method of operating the electronic device may include obtaining a first image signal of a first frame composed of the first color pattern through the image sensor, based on the user input. The method of operating the electronic device may include converting the first image signal of the first frame into a second image signal of the first frame composed of the second color pattern. The method of operating the electronic device may include obtaining first draft image data by applying the second image signal of the first frame to the image signal processor. The method of operating the electronic device may include obtaining first capture image data by demosaicking the first image signal of the first frame. The method of operating the electronic device may include replacing the first draft image data with the first capture image data.

A non-transitory computer-readable recording medium according to an embodiment may be a recording medium storing instructions for controlling an electronic device including a color filter array including a first color pattern, an image sensor configured to generate an image signal by using light passing through the color filter array, and an image signal processor configured to process an image signal composed of a second color pattern. The recording medium may store an instruction for receiving a user input related to acquisition of a capture image. The recording medium may store an instruction for obtaining a first image signal of a first frame composed of the first color pattern through the image sensor, based on the user input. The recording medium may store an instruction for converting the first image signal of the first frame into a second image signal of the first frame composed of the second color pattern. The recording medium may store an instruction for obtaining first draft image data by applying the second image signal of the first frame to the image signal processor. The recording medium may store an instruction for obtaining first capture image data by demosaicking the first image signal of the first frame. The recording medium may store an instruction for replacing the first draft image data with the first capture image data.

### [Brief Description of Drawings]

FIG. 1 illustrates a method in which an electronic device obtains an image by using a camera module, according to an embodiment;
FIG. 2 is a block diagram illustrating an electronic device in a network environment, according to various embodiments;
FIG. 3 is a block diagram exemplifying a camera module, according to various embodiments;
FIG. 4 is a block diagram illustrating a configuration of an electronic device according to an embodiment;
FIG. 5 is a conceptual view illustrating a configuration of an image sensor, according to an embodiment;
FIG. 6 conceptually illustrates a pattern of a color filter array, according to an embodiment;
FIG. 7 is a drawing for explaining a method of operating an electronic device according to an embodiment;
FIG. 8 is a flowchart illustrating a method of operating of an electronic device according to an embodiment;
FIG. 9 is a flowchart illustrating a method of operating an electronic device according to an embodiment;
FIG. 10 is a flowchart illustrating a method of operating an electronic device according to an embodiment;
FIG. 11 is a diagram conceptually illustrating conversion of a color pattern of an image signal, according to an embodiment;
FIG. 12 is a drawing conceptually illustrating conversion of a color pattern of an image signal, according to an embodiment; and
FIG. 13 is a drawing conceptually illustrating up-scaling of image data, according to an embodiment.

### [Mode for the Invention]

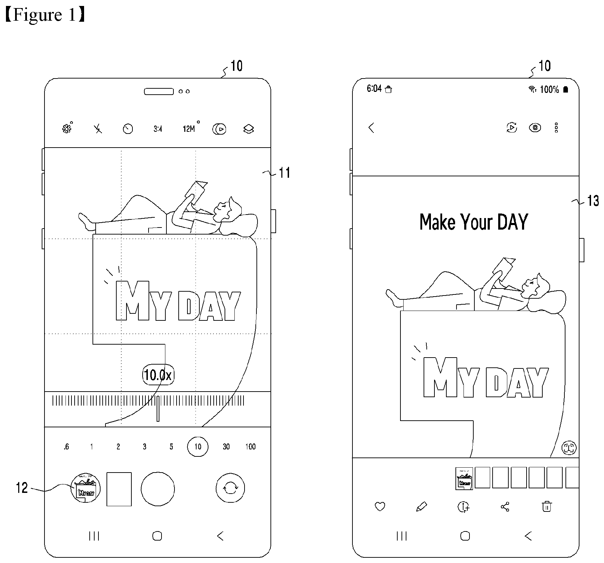

FIG. 1 illustrates a method in which an electronic device obtains an image by using a camera module, according to an embodiment.

Referring to FIG. 1, an electronic device 10 may obtain an image signal by using an image sensor included in a camera module. For example, the electronic device 10 may obtain the image signal by controlling the camera module through a camera application. The camera application may generate a control signal including a request related to acquisition of the image signal. The camera module may obtain the image signal in response to the request received from the camera application. The electronic device 10 may obtain still image and/or moving image data by processing the image signal output from the image sensor.

The electronic device 10 may include a hardware-implemented image signal processor (ISP) which consumes low power and quickly processes the image signal. The ISP may be implemented as a hardware chip or as a hardware block included in a processor (e.g., an application processor (AP), a central processing unit (CPU), a graphical processing unit (GPU), or a neural processing unit (NPU)).

The hardware-implemented ISP may rapidly process the image signal by using a pipeline designed to process a preset type of image signal. For example, the ISP may be designed to process an image signal composed of a commonly used Bayer pattern. For example, when an image signal composed of a pattern different from the Bayer pattern (hereinafter referred to as a non-Bayer pattern) is input, the ISP may not be able to process the image signal.

An image obtained using a high-resolution image sensor including a color filter array (CFA) of the non-Bayer pattern may have higher quality in a low-illuminance environment than an image obtained using a high-resolution image sensor including a CFA of the Bayer pattern. The image obtained using the high-resolution image sensor including the CFA of the non-Bayer pattern may have higher quality in a high-illuminance environment than an image obtained using a low-resolution image sensor including the CFA of the Bayer pattern. Although the image signal composed of the non-Bayer pattern has not been commonly used, the image sensor including the CFA of the non-Bayer pattern is mounted in the electronic device 10 in order to meet a demand for high-quality images.

In order for the electronic device 10 to process a second image signal (e.g., the image signal composed of the non-Bayer pattern) different from a first image signal of a preset type (e.g., the image signal composed of the Bayer pattern) by using a hardware-implemented image processor, a new ISP having a pipeline redesigned to process the second image signal needs to be mounted. A large amount of time and cost are required to develop and manufacture the new ISP. Accordingly, methods are required in which the first image signal is processed using an existing ISP and the second image signal is processed using software.

According to an embodiment, the electronic device 10 may display a preview image 11 through a camera application. The preview image 11 may include an image provided by the electronic device 10 which allows a user to check a position of a subject to be captured, lighting, and the like so as to obtain a desired image. In response to a preview request transmitted from the camera application to the camera module, the electronic device 10 may display, through a display, the preview image 11 output by the camera module. In response to the preview request received from the camera application, the electronic device 10 may obtain an image signal of a frame through the image sensor. The obtained image signal may be an image signal composed of a first color pattern (e.g., the Bayer pattern). The electronic device 10 may generate the preview image 11 by applying the image signal obtained by the image sensor to the ISP. The ISP may be a hardware ISP designed to process the image signal composed of the first color pattern. The ISP may generate the preview image 11 by receiving, from the image sensor, the image signal of the frame obtained in response to the preview image request. The electronic device 10 may display the preview image 11 output from the ISP.

According to an embodiment, the electronic device 10 may obtain image data in response to a user input received through the camera application. For example, the electronic device 10 may obtain a still image and/or a moving image in response to a user input for obtaining the still image and/or the moving image. The electronic device 10 may obtain, through the image sensor, an image signal of a frame for generating the still image and/or the moving image. The electronic device 10 may generate the still image and/or the moving image by processing the image signal. The electronic device 10 may generate draft image data 13 and capture image data in response to the user input. The draft image data 13 may include image data generated by applying only some of computations which may be applied to an image signal obtained by the image sensor, thereby allowing the user to quickly check the requested image. The capture image data may include image data generated by applying one or more preset computations to the image signal. For example, the capture image data may include image data generated by applying at least one computation such as demosaicking, a computation for adjusting white balance, contrast, and saturation values, gamma correction, color correction, sharpening, noise removal, tone mapping, and edge enhancement. The capture image data may be an image having higher quality than the draft image data 13. For example, the capture image data may be an image having a higher resolution than the draft image data 13. For example, the capture image data may be an image having higher quality than the draft image data 13 since noise is removed. For example, the capture image data may be a high dynamic range (HDR) image generated by synthesizing multi-frames. The number of computations applied to generate the capture image data may be greater than the number of computations applied to generate the draft image data 13. A time required to generate the capture image data may be longer than a time required to generate the draft image data 13. The electronic device 10 may display the draft image data 13 before the capture image data is generated. For example, the electronic device 10 may display the draft image data 13 on at least a portion of the camera application. For example, the electronic device 10 may generate a thumbnail 12 by resizing the draft image data 13 and display the thumbnail 12 in at least a portion of the camera application. For example, the electronic device 10 may display the draft image data 13 by using a gallery application. The electronic device 10 may replace the draft image data 13 with the generated capture image data after generating the draft image data 13. For example, the electronic device 10 may overwrite the draft image data 13 with the capture image data. For example, the electronic device 10 may display the capture image data by replacing the draft image data 13 displayed on the display.

According to an embodiment, the electronic device 10 may transmit a capture request to the camera module through the camera application in response to a user input for obtaining an image. The electronic device 10 may use an image signal of a first frame, which is first obtained after the camera module receives the capture request, to generate capture image data. The image signal of the first frame may be an image signal composed of a second color pattern (e.g., the non-Bayer pattern). When the ISP is designed to process the image signal composed of the first color pattern (e.g., the Bayer pattern), the ISP may not be able to process the image signal of the first frame. The electronic device 10 may obtain the capture image data by performing signal processing on the image signal of the first frame by using a software module. For example, the electronic device 10 may perform demosaicking on the image signal of the first frame by using the software module. For example, the electronic device 10 may adjust a white balance value, a contrast value, and a saturation value for the image signal of the first frame by using the software module. For example, the electronic device 10 may perform noise reduction on the image signal of the first frame by using the software module. The electronic device 10 may use an image signal of a second frame, which is obtained before the first frame, to generate draft image data 13. The image signal of the second frame may be a signal of an image obtained in response to a preview request. When the image signal of the second frame is obtained in response to the preview request, the image signal of the second frame may be an image signal composed of the first color pattern (e.g., the Bayer pattern). Accordingly, the electronic device 10 may obtain the draft image data 13 by applying the image signal of the second frame to the ISP. Due to a time difference between times at which the first frame and the second frame are obtained, a composition of the capture image data obtained from the image signal of the first frame may differ from a composition of the draft image data 13 obtained from the image signal of the second frame. A difference between the capture image data and the draft image data 13 may cause inconvenience to a user of the electronic device 10.

According to an embodiment, the electronic device 10 may use image signals of the same frame to obtain the capture image data and the draft image data 13. For example, the electronic device 10 may use the image signal of the first frame, which is first obtained after the camera module receives the capture request, to generate the draft image data 13 and the capture image data. For example, the electronic device 10 may obtain the draft image data 13 through the hardware ISP by preprocessing the image signal of the first frame. According to the disclosed embodiment, the electronic device 10 may obtain capture image data having a composition not difference from that of the draft image data 13.

Technical problems to be solved in the disclosure are not limited to the technical problems mentioned above, and other technical problems not mentioned herein may be clearly understood by those skilled in the art to which the disclosure pertains from the following descriptions.

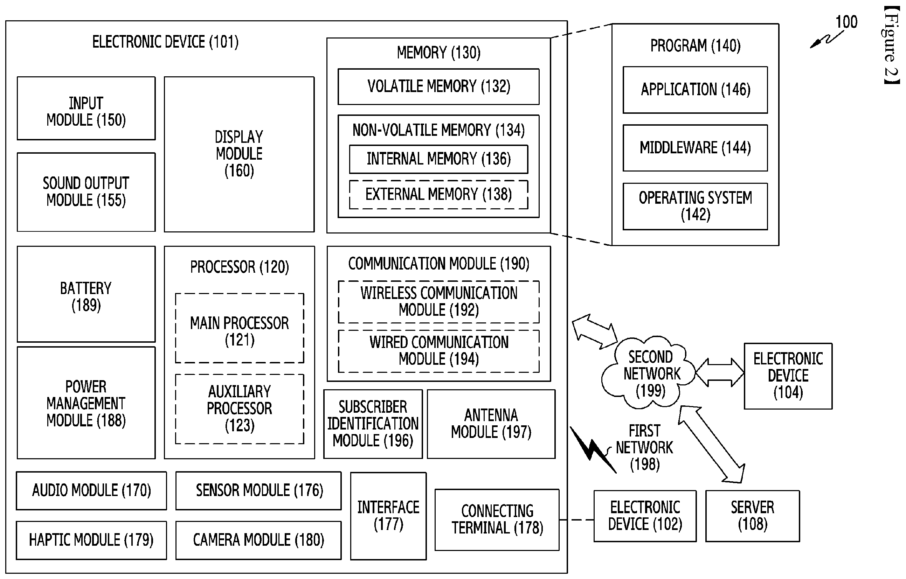

Fig. 2 is a block diagram illustrating an electronic device 101 in a network environment 100 according to various embodiments. Referring to Fig. 2, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121. The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146. The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197. According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service.

The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

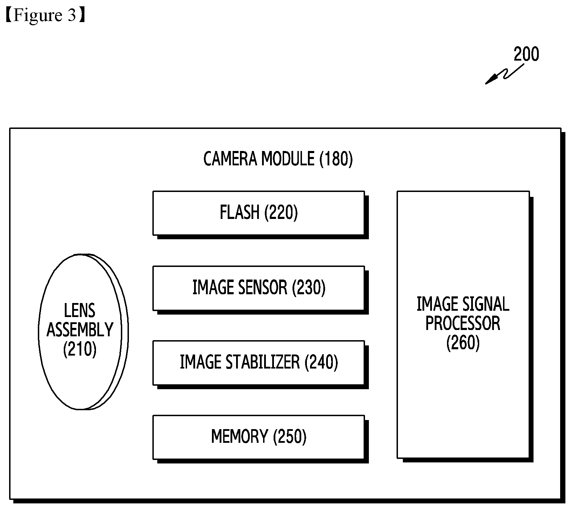

FIG. 3 is a block diagram 200 exemplifying a camera module 180, according to various embodiments. Referring to FIG. 3, the camera module 180 may include a lens assembly 210, a flash 220, an image sensor 230, an image stabilizer 240, a memory 250 (e.g., a buffer memory), or an ISP 260. The lens assembly 210 may collect light emitted from a subject of which an image is to be captured. The lens assembly 210 may include one or more lenses. According to an embodiment, the camera module 180 may include the plurality of lens assemblies 210. In this case, the camera module 180 may constitute, for example, a dual camera, a 360-degree camera, or a spherical camera. Some of the plurality of lens assemblies 210 may have the same lens attribute (e.g., a field of view, a focal length, auto-focusing, f number, or optical zoom), or at least one lens assembly may have one or more lens attributes different from those of other lens assemblies. The lens assembly 210 may include, for example, a wide-angle lens or a telephoto lens.

The flash 220 may emit light which is used to reinforce light emitted or reflected from the subject. According to an embodiment, the flash 220 may include one or more light emitting diodes (LEDs) (e.g., a red-green-blue (RGB) LED, a white LED, an infrared (IR) LED, or an ultraviolet (UV) LED, or a xenon lamp). The image sensor 230 may obtain an image corresponding to the subject by converting the light emitted or reflected from the subject and transmitted via the lens assembly 210 into an electrical signal. According to an embodiment, the image sensor 230 may include one image sensor selected from image sensors having different attributes, such as an RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational feature (e.g., adjust a read-out timing) of the image sensor 230, in response to the movement of the camera module 180 or the electronic device 101 including the camera module 180. In doing so, at least part of a negative effect caused by the movement on an image being captured may be compensated for. According to an embodiment, the image stabilizer 240 may sense the movement of the camera module 180 or electronic device 101 by using a gyro sensor (not shown) or acceleration sensor (not shown) disposed inside or outside the camera module 180. According to an embodiment, the image stabilizer 240 may be implemented, for example, as an optic image stabilizer. The memory 250 may store, at least temporarily, at least part of an image obtained through the image sensor 230 for a subsequent image processing task. For example, when image acquisition is delayed depending on a shutter or when a plurality of images are quickly obtained, an obtained raw image (e.g., a Bayer-patterned image or a high-resolution image) may be stored in the memory 250, and its corresponding copy image (e.g., a low-resolution image) may be previewed through the display device 160. Thereafter, when a specified condition is met (e.g., by a user's input or system command), at least part of the raw image stored in the memory 250 may be obtained and processed, for example, by the ISP 260. According to an embodiment, the memory 250 may be configured as at least part of the memory 130 or as a separate memory which is operated independently from the memory 130.

The ISP 260 may perform at least one image processing on an image obtained through the image sensor 230 or an image stored in the memory 250. The at least one image processing may include, for example, depth map generation, three-dimensional (3D) modeling, panorama generation, feature point extraction, image synthesis, or image compensation (e.g., noise reduction, resolution adjustment, brightness adjustment, blurring, sharpening, or softening). Additionally or alternatively, the ISP 260 may provide control (e.g., exposure time control or read-out timing control or the like) to at least one (e.g., the image sensor 230) of the components included in the camera module 180. An image processed by the ISP 260 may be stored again in the memory 250 for additional processing, or may be provided to an external component (e.g., the memory 130, the display device 160, the electronic device 102, the electronic device 104, or the server 108) of the camera module 180. According to an embodiment, the ISP 260 may be configured as at least part of the processor 120, or as a separate processor which is operated independently from the processor 120. When the ISP 260 is configured as a separate processor with respect to the processor 120, at least one image processed by the ISP 260 may be displayed by the processor 120 through the display device 160 as it is or after undergoing additional image processing.

According to an embodiment, the electronic device 101 may include the plurality of camera modules 180 having different attributes or functions. In this case, for example, at least one of the plurality of camera modules 180 may be a wide-angle camera, and at least another one may be a telephoto camera. Similarly, at least one of the plurality of camera modules 180 may be a front camera, and at least another one may be a rear camera.

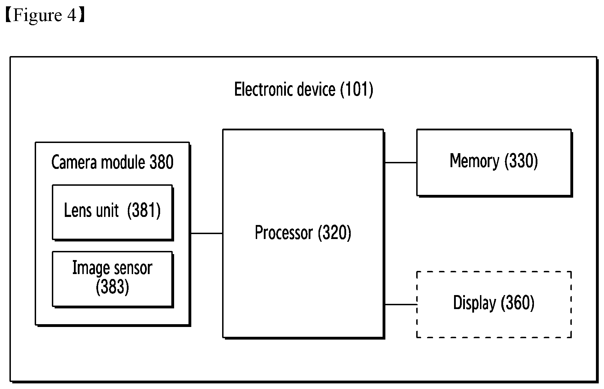

FIG. 4 is a block diagram illustrating a configuration of an electronic device according to an embodiment.

Referring to FIG. 4, an electronic device 101 according to an embodiment may include a camera module 380, a memory 330, and a processor 320. The electronic device 101 according to an embodiment may further include a display 360. The display 360 may be replaced with an external display coupled to the electronic device 101. The electronic device 101, the processor 320, the memory 330, the camera module 380, and the display 360 may respectively correspond to the electronic device 101, the processor 120, the memory 130, the camera module 180, and the display 160 which are described above with reference to FIG. 2 and FIG. 3. However, the components of the electronic device 101 of FIG. 4 are intended to explain an embodiment, and the electronic device 101 may include more components than the components of FIG. 4, or may include other components which may replace at least some of the components. For example, the memory 330 is not limited to a storage medium included in the electronic device 101, and may include a cloud storage outside the electronic device 101.

According to an embodiment, the camera module 380 may include a lens unit 381 including at least one lens for collecting light, and an image sensor 383 converting an optical signal passing through the lens unit 381 into a digital signal. The image sensor 383 may correspond to the image sensor 230 described with reference to FIG. 3. The image sensor 383 may include a CFA including a plurality of photosensitive elements, a plurality of micro lenses, and a plurality of color channels. The plurality of photosensitive elements may include photo diodes arranged to correspond to one micro lens as an array having M rows and N columns. Herein, each of M and N may be a natural number greater than or equal to 1. The CFA included in the image sensor 383 may be composed of a non-Bayer pattern (e.g., a tetra pattern, a nona pattern, or a hexadeca pattern). That is, each of elements constituting the CFA may have a color matched according to the non-Bayer pattern. Among the elements constituting the CFA, element groups aggregated with adjacent elements which are matched to the same color may have colors matched to correspond to a Bayer pattern.

According to an embodiment, the image sensor 383 may output an image signal (e.g., raw image data) composed of the non-Bayer pattern. For example, the image sensor 383 including the CFA composed of the non-Bayer pattern may use an output value of a photosensitive element corresponding to the element of the CFA to determine a pixel value, thereby outputting an image signal composed of the non-Bayer pattern. The image signal output from the image sensor 383 may be data in which a color pattern is maintained since a color order of a color pattern of the image sensor 383 is not changed.

According to an embodiment, the image sensor 383 may output an image signal (e.g., raw image data) composed of the Bayer pattern. For example, the image sensor 383 including the CFA composed of the non-Bayer pattern may output the image signal composed of the Bayer pattern, by binning output values of photosensitive elements corresponding to the element group constituting the CFA.

According to an embodiment, the image sensor 383 may operate in a high-resolution capture mode. The high-resolution capture mode may include a mode in which output values of photosensitive elements included in the image sensor 383 are used as pixel values of pixels corresponding to the respective photosensitive elements. For example, the electronic device 101 may use the image sensor 383 having 50-megapixel (50Mp) photosensitive elements to use output values of the 50Mp photosensitive elements as pixel values of pixels corresponding to the respective photosensitive elements, thereby obtaining high-resolution image data. In the disclosure, the high-resolution capture mode may be understood as a full pixel capture mode.

According to an embodiment, the image sensor 383 may operate in a crop capture mode. The crop capture mode may include a mode in which output values of a specific number of photosensitive elements (e.g., a specific number of photosensitive elements located at a center portion of the image sensor) among the photosensitive elements are used as pixel values. The electronic device 101 may obtain an image of which a field of view is narrowed through the crop capture mode, and may provide a user with an experience as if a zoom-in function operates. For example, when the electronic device 101 operates in the crop capture mode in which output values of 12.5-megapixel (12.5Mp) photosensitive elements located at a center of the image sensor 383 having 50Mp photosensitive elements are used as pixel values, the user may be provided with an experience as if a 2x zoom-in function operates. The electronic device 101 may control the image sensor 383 to operate in the crop capture mode, based on a user input for setting a zoom function to a preset magnification value.

According to an embodiment, the image sensor 383 may operate in a low-illumination capture mode. The low-illumination capture mode may include a mode in which values output from first photosensitive elements corresponding to elements of the CFA matched to the same color of photosensitive elements included in the image sensor 383 are used as pixel values of first pixels corresponding to the first photosensitive elements.

According to an embodiment, the image sensor 383 may operate in a multi-frame synthesis mode. The multi-frame synthesis mode may include a mode in which the image sensor 383 obtains a plurality of frames having different exposure values.

According to an embodiment, the memory 330 may store instructions executable by the processor 320. The processor 320 may execute the instructions stored in the memory 330 to perform a computation or to control components of the electronic device 101.

In the disclosure, the operation of the electronic device 101 may be understood as being performed when the at least one processor 320 executes the instructions. According to an embodiment, the processor 320 may include an application processor (AP), a central processing unit (CPU), an image signal processor (ISP) (e.g., the ISP 260 of FIG. 3), a graphical processing unit (GPU), and/or a neural processing unit (NPU).

According to an embodiment, the processor 320 may execute a camera application to control the camera module 380. For example, the processor 320 may use the camera application to initiate an operation of the camera module 380. For example, the processor 320 may use the camera application to provide the camera module 380 with a request for obtaining at least one frame (e.g., a preview frame, a capture frame). For example, the processor 320 may use the camera application to obtain one or more frames. For example, the processor 320 may identify a user input received using the camera application (e.g., a user input related to acquisition of a capture image). For example, the processor 320 may use the camera application to obtain image data (e.g., preview image data, draft image data, capture image data, moving image data). For example, the processor 320 may display the obtained image data by using the display 360.

According to an embodiment, the processor 320 may control the image sensor to obtain an image corresponding to a user input. The processor 320 may control the image sensor 383 to operate based on a selected capture mode. For example, the image sensor 383 may output an image signal (e.g., raw image data) by reading out respective outputs of photosensitive elements constituting the image sensor 383 to correspond to pixels corresponding to the respective photosensitive elements, based on a first capture mode (e.g., the high-resolution capture mode or the full-pixel capture mode). For example, the image sensor 383 may output the image signal (e.g., the raw image data) by reading out respective outputs of a specific number of first photosensitive elements among the plurality of photosensitive elements to correspond to pixels corresponding to the respective first photosensitive elements, based on a second capture mode (e.g., the crop capture mode). For example, the image sensor 383 may output the image signal (e.g., the raw image data) by reading out an output of a first group including a plurality of photosensitive elements to correspond to a first pixel corresponding to the first group, based on a third capture mode (e.g., the low-illumination capture mode).

According to an embodiment, the processor 320 may obtain image data by performing a computation on the image signal (e.g., the raw image data) output from the image sensor 383. For example, the processor 320 may perform at least one computation (e.g., demosaicking, a computation for adjusting white balance, contrast, and saturation values, gamma correction, color correction, sharpening, noise removal, tone mapping, and edge enhancement) on the image signal. For example, the processor 320 may generate a second image signal (e.g., raw image data composed of the Bayer pattern) by performing remosaicking on a first image (e.g., raw image data composed of the non-Bayer pattern) output from the image sensor 383. For example, the processor 320 may perform at least one computation (e.g., demosaicking, a computation for adjusting white balance, contrast, saturation values, gamma correction, color correction, sharpening, noise removal, tone mapping, and edge enhancement) by inputting to an ISP (e.g., the ISP 260 of FIG. 2) the image signal output from the image sensor 383. The processor 320 may store the generated image data in the memory 330.

According to an embodiment, the processor 320 may initiate the operation of the camera module 380. For example, the processor 320 may initiate the operation of the camera module 380 by providing a hardware abstraction layer (HAL) with a control signal including an identification (ID) of a camera and an instruction for initiating the operation of the camera.

According to an embodiment, the processor 320 may obtain one or more frames. For example, the processor 320 may obtain the one or more frames by controlling the camera module 380 through a request for obtaining a frame. For example, the processor 320 may obtain a preview frame composed of a Bayer pattern. For example, the processor 320 may obtain a capture frame composed of a non-Bayer pattern.

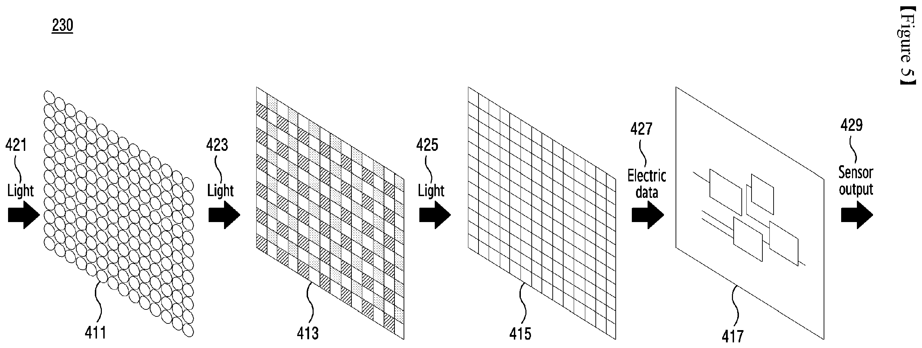

According to an embodiment, the processor 320 may convert a first image signal composed of a first color pattern (e.g., the non-Bayer pattern) into a second image signal composed of a second color pattern (e.g., the Bayer pattern). For example, the processor 320 may perform remosaicking on the first image signal to convert the first image signal into the second image signal. For example, the processor 320 may perform binning on the first image signal to convert the first image signal into the second image signal. For example, the processor 320 may control a computation unit (e.g., 417 of FIG. 5) of the image sensor 383 to convert the first image signal into the second image signal.

According to an embodiment, the processor 320 may identify a received user input. For example, the processor 320 may identify a user input for changing a capture mode (e.g., the high-resolution capture mode, the crop capture mode, the low-illumination capture mode, a multi-frame synthesis mode, a still image capture mode, a moving image capture mode). For example, the processor 320 may identify a user input for obtaining a still image and/or a moving image. For example, the processor 320 may identify a user input for obtaining an image in which multi-frames are synthesized.

According to an embodiment, the processor 320 may obtain preview image data. For example, the processor 320 may generate the preview image data by applying to the ISP 260 an image signal composed of the Bayer pattern, which is output from the image sensor 383 including a color filter of the Bayer pattern. For example, the processor 320 may control the computation unit (e.g., 417 of FIG. 5) of the image sensor 383 to output the image signal composed of the Bayer pattern, by binning an output value of a photosensitive element of the image sensor 383.

According to an embodiment, the processor 320 may obtain draft image data. For example, the processor 320 may convert the first image signal composed of the non-Bayer pattern, which is output from the image sensor 383, into the second image signal composed of the Bayer pattern, and generate draft image data by applying the second image signal to the ISP. For example, the processor 320 may convert the first image signal into the second image signal, by binning pixel values constituting the first image signal. For example, the processor 320 may obtain draft image data by demosaicking and/or up-scaling the second image signal obtained by performing binning.

According to an embodiment, the processor 320 may obtain a capture image. For example, the processor 320 may generate the capture image by performing at least one computation (e.g., demosaicking, a computation for adjusting white balance, contrast, and saturation values, gamma correction, color correction, sharpening, noise removal, tone mapping, and edge enhancement) on the first image signal composed of the non-Bayer pattern, which is output from the image sensor 383. For example, the processor 320 may generate the capture image, based on the high-resolution capture mode, by performing a computation on an image signal of a frame composed of the non-Bayer pattern. For example, the processor 320 may generate the capture image, based on the crop capture mode, by performing the computation on the image signal of the frame composed of the non-Bayer pattern.

According to an embodiment, the processor 320 may obtain a multi-frame synthesis image. For example, the processor 320 may set a first frame as a reference frame among a plurality of frames obtained through the image sensor 383. The processor 320 may synthesize an image signal of a second frame with respect to an image signal of the first frame, based on the first frame. The processor 320 may perform demosaicking on the synthesized image signal to obtain an image in which multiple frames are synthesized.

According to an embodiment, the processor 320 may display obtained image data by using the display 360. For example, the processor 320 may display preview image data, draft image data, and/or capture image data on at least a portion of a camera application.

According to an embodiment, the processor 320 may replace the draft image data with the capture image data. For example, the processor 320 may overwrite the draft image data stored in the memory 330 with the capture image data. For example, the processor 320 may control the display 360 to display the capture image data by replacing the draft image data being displayed with the capture image data.

According to an embodiment, the display 360 may display one or more pieces of information under the control of the processor 320. For example, the display 360 may display a user interface (UI) of the electronic device. For example, the display 360 may display an execution screen of an application executed in the electronic device. For example, the display 360 may display preview image data, draft image data, and capture image data.

FIG. 5 is a conceptual view illustrating a configuration of an image sensor, according to an embodiment. The image sensor of FIG. 5 may correspond to the image sensors 230 and 383 described above with reference to FIG. 3 and FIG. 4.

Referring to FIG. 5, in an embodiment, an image sensor 230 may include a micro lens array (MLA) 411, a CFA 413, a light-receiving unit 415, and a computation unit 417.

In an embodiment, the MLA 411 may be disposed such that a light bundle 421 passing through a lens assembly and forming an image on the image sensor 230 is focused onto a photosensitive element of the light-receiving unit 415. In a light bundle 423 passing through the MLA 411, at least part of a wavelength other than a band corresponding to a specific color may be blocked while passing through the CFA 413. For example, the CFA may be disposed at a location corresponding to a pixel of the image sensor 230. Light bundles 425 passing through the CFA 413 may be detected by a photosensitive element (e.g., a photo diode) of the light-receiving unit 415. The light-receiving unit 415 may include a photosensitive element (e.g., including a light-receiving circuit) which generates an electric charge upon receiving light and converts it into an electrical signal and a circuit which selectively reads out the electric charge of the photosensitive element. A circuit for digitizing a signal read out from the light-receiving unit 415 or for reducing noise may be further disposed between the light-receiving unit 415 and the computation unit 417.

In an embodiment, the computation unit 417 may perform a computation for processing electric data (or signal) 427 output from the light-receiving unit 415. The computation unit 417 may output data obtained based on a result of the computation. An output of the computation unit 417 may be a sensor output 429 of the image sensor 230.

In an embodiment, the computation unit 417 may perform an operation of calibrating the read-out data as a computation of processing the electrical data 427. For example, the computation performed by the computation unit 417 may include at least one of computations including: reducing deviations between pixels caused by optical characteristics or relative positions of sensors; reducing noise generated in an analog signal; removing defects; remosaicking; binning; and applying to a specific application field (e.g., a proximity sensor function, a timing adjustment function, or a high dynamic range (HDR) tone mapping function).

In an embodiment, the electronic device 101 may be configured such that the computation performed by the computation unit 417 is performed by another processor (e.g., an AP, a CPU, a GPU, an NPU, or an ISP). The sensor output 429 may be input to a processor (e.g., the AP, the CPU, the GPU, the NPU, or the ISP) through an interface.

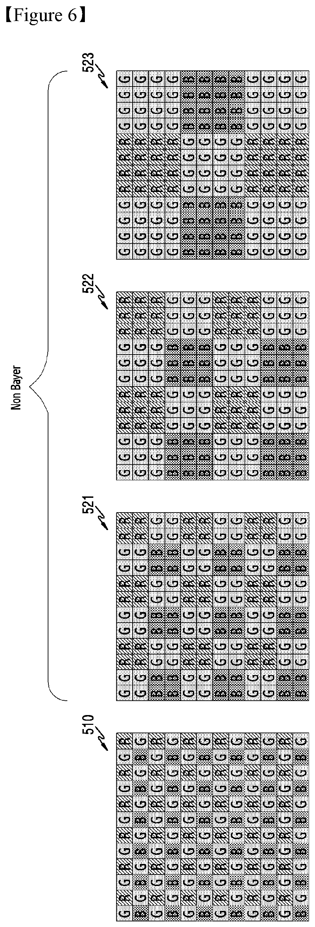

FIG. 6 conceptually illustrates a pattern of a CFA, according to an embodiment. The pattern applied to the CFA 413 of FIG. 5 may be the pattern of the CFA of FIG. 6.

Referring to FIG. 6, the CFA may be composed of various patterns. For example, the CFA may be composed of a Bayer pattern 510. For example, the CFA may be composed of a non-Bayer pattern different from the Bayer pattern. For example, the non-Bayer pattern may include a tetra pattern 521, a nona pattern 522, and a hexadeca pattern 523. The hexadeca pattern 523 may be referred to as a tetra square pattern. Colors of element groups of the CFA composed of the non-Bayer pattern may be matched to correspond to the Bayer pattern.

The CFA composed of the Bayer pattern 510 may include a pattern in which, among elements constituting the CFA, respective elements positioned above, below, left, and right of a first element are arranged such that the elements are matched to colors different from a first color matched to the first element. Since the Bayer pattern 510 is a widely known pattern, a detailed description thereof will be omitted.

The CFA composed of the tetra pattern 521 may include element groups each having four elements (2×2). In the CFA composed of the tetra pattern 521, elements constituting a first element group may be matched to a first color, and the element groups may be arranged such that respective element groups positioned above, below, left, and right of the first element group are matched to colors different from the first color. Colors of the element groups of the CFA composed of the tetra pattern may be matched to correspond to the Bayer pattern. Since the tetra pattern 521 is a known pattern, a detailed description thereof will be omitted.

The CFA composed of the nona pattern 522 may include element groups each having nine elements (3×3). In the CFA composed of the nona pattern 522, elements constituting a first element group may be matched to a first color, and the element groups may be arranged such that respective element groups positioned above, below, left, and right of the first element group are matched to colors different from the first color. Colors of the element groups of the CFA composed of the nona pattern 522 may be matched to correspond to the Bayer pattern. Since the nona pattern 522 is a known pattern, a detailed description thereof will be omitted.

The CFA composed of the hexadeca pattern 523 may include a pattern in which element groups each having sixteen elements (4×4) are arranged. The hexadeca pattern 523 may include a pattern in which elements constituting a first element group are matched to a first color, and element groups are arranged such that respective element groups positioned above, below, left, and right of the first element group are matched to colors different from the first color. Colors of the element groups of the CFA composed of the hexadeca pattern 523 may be matched to correspond to the Bayer pattern. Since the hexadeca pattern 523 is a known pattern, a detailed description thereof will be omitted.

The elements of the CFA may be disposed at positions respectively corresponding to photosensitive elements (e.g., 415 of FIG. 5) of an image sensor (e.g., 230 of FIG. 3 or 383 of FIG. 4). Since light passing through an element of the CFA may have wavelengths outside a band corresponding to a specific color matched to the element filtered out, a photosensitive element corresponding to the element may detect light including the band corresponding to the specific color matched to the element.

The image sensor (e.g., 230 of FIG. 3 or 383 of FIG. 4) may generate an image signal by reading out an electric charge from each of the photosensitive elements. As the image sensor reads out the electric charge from the photosensitive elements, the image sensor may generate an image signal including information on colors matched to elements respectively corresponding to the photosensitive elements. For example, the image sensor (e.g., 230 of FIG. 3 or 383 of FIG. 4) may generate an image signal including color information of a color pattern by using pixel values of pixels respectively corresponding to the photosensitive elements, the pixel values being obtained based on charge values read out from each of the photosensitive elements. For example, the image sensor (e.g., 230 of FIG. 3 or 383 of FIG. 4) may generate an image signal including color information of the Bayer pattern from photosensitive elements detecting light which has passed through the CFA of the Bayer pattern. For example, the image sensor (e.g., 230 of FIG. 3 or 383 of FIG. 4) may generate an image signal including color information of the tetra pattern from photosensitive elements detecting light which has passed through the CFA of the tetra pattern. For example, the image sensor (e.g., 230 of FIG. 3 or 383 of FIG. 4) may generate an image signal including color information of the nona pattern from photosensitive elements detecting light which has passed through the CFA of the nona pattern. For example, the image sensor (e.g., 230 of FIG. 3 or 383 of FIG. 4) may generate an image signal including color information of the hexadeca pattern from photosensitive elements detecting light which has passed through the CFA of the hexadeca pattern.

According to an embodiment, the image sensor (e.g., 230 of FIG. 3 or 383 of FIG. 4) may generate an image signal in which pixels are configured to correspond to element groups. For example, the image sensor (e.g., 230 of FIG. 3 or 383 of FIG. 4) may generate an image signal including a pixel value of a first pixel corresponding to a first element group by performing a computation (e.g., binning, summing, or remosaicking) on output values of photosensitive elements corresponding to the first element group. For example, the image sensor (e.g., 230 of FIG. 3 or 383 of FIG. 4) including the CFA composed of the tetra pattern may generate an image signal such that a first pixel corresponding to a first element group includes a pixel value for red by binning output values of four photosensitive elements corresponding to the first element group to which the color red is matched.

According to an embodiment, the image sensor (e.g., 230 of FIG. 3 or 383 of FIG. 4) including the CFA composed of the non-Bayer pattern may generate an image signal including color information of the Bayer pattern, based on a color pattern of element groups composed of the Bayer pattern. For example, based on colors of respective element groups of the CFA composed of the tetra pattern, the nona pattern, or the hexadeca pattern being matched to correspond to the Bayer pattern, the image sensor (e.g., 230 of FIG. 3 or 383 of FIG. 4) may generate an image signal including color information of the Bayer pattern by binning output values of photosensitive elements corresponding to the element groups such that pixels respectively corresponding to the element groups include the color information of the Bayer pattern. The image sensor (e.g., 230 of FIG. 3 or 383 of FIG. 4) may output an image signal including color information of the Bayer pattern. For example, the image sensor (e.g., 230 of FIG. 3 or 383 of FIG. 4) may output raw image data including color information of the Bayer pattern.

According to an embodiment, the image sensor (e.g., 230 of FIG. 3 or 383 of FIG. 4) including the CFA composed of the non-Bayer pattern may generate and output an image signal including color information of the non-Bayer pattern. For example, the image sensor (e.g., 230 of FIG. 3 or 383 of FIG. 4) including the CFA composed of the tetra pattern, the nona pattern, or the hexadeca pattern may output raw image data including color information of the tetra pattern, the nona pattern, or the hexadeca pattern.

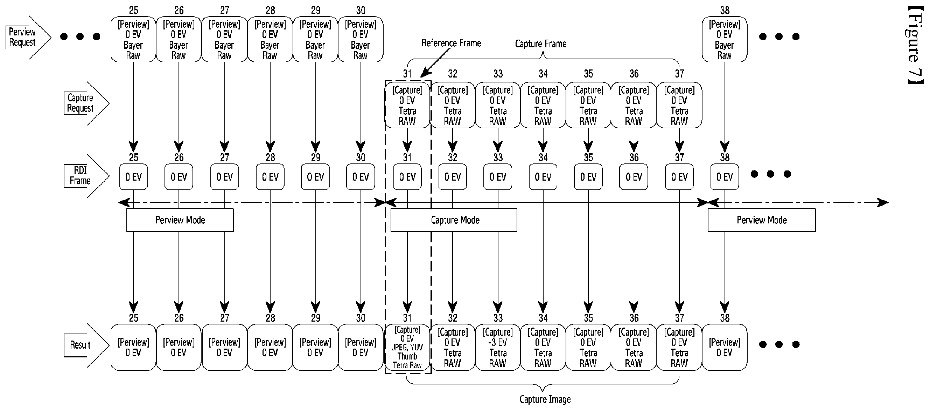

FIG. 7 is a drawing for explaining a method of operating an electronic device according to an embodiment.

FIG. 7 may include an operating method in which an electronic device obtains image signals over time by using a camera module including a CFA composed of a non-Bayer pattern. FIG. 7 may include a method of operating an electronic device including the camera module 180 or 380 described with reference to FIGS. 2 to 4.

According to an embodiment, the camera module may output an image signal in response to a received request. For example, the camera module may obtain and output an image corresponding to a request received from a camera application executed by the electronic device. The camera module may obtain and output a frame at a predetermined time interval. The electronic device may output frames from the image sensor through a raw dump interface (RDI). The frames output from the image sensor may be transmitted to a memory (e.g., 320 of FIG. 4). The electronic device may generate image data (e.g., a preview image, a draft image, or a capture image) corresponding to the request by performing image processing on the frames output from the image sensor.

Referring to FIG. 7, the camera module may output an image signal of a preview frame in response to being in a preview mode. For example, the camera module may obtain the preview frame by using an image sensor in response to a preview image request received from a camera application. For example, based on a default operation mode of the camera module being in the preview mode, the camera module may identify a request to initiate an operation as the preview image request. The camera module may obtain the preview frame in response to receiving the request to initiate the operation from the camera application.

According to an embodiment, the camera module may obtain the preview frame at a predetermined time interval. For example, the camera module may obtain the preview frame in response to receiving the preview image request from the camera application at the predetermined time interval. For example, the camera module may obtain the preview frame in response to receiving the request to initiate the operation until an additional request (e.g., a capture image request) is received from the camera application.

According to an embodiment, the preview frame output from the image sensor may be a frame composed of a Bayer pattern. For example, the preview frame output from the image sensor may be a frame composed of a Bayer pattern. For example, the image sensor may output an image signal of the frame composed of the Bayer pattern by binning output values of photosensitive elements. For example, with respect to an image signal of a frame composed of a tetra pattern, the image sensor may output an image signal of the frame composed of the Bayer pattern by merging pixels arranged in a 2×2 array including identical color information. For example, the image sensor may output an image signal composed of a 12.5Mp Bayer pattern by binning output values of 50 million photosensitive elements. For example, with respect to an image signal of a frame composed of a nona pattern, the image sensor may output an image signal of the frame composed of the Bayer pattern by merging pixels arranged in a 3×3 array including identical color information. For example, with respect to an image signal of a frame composed of a hexadeca pattern, the image sensor may output an image signal of the frame composed of the Bayer pattern by merging pixels arranged in a 4×4 array including identical color information.

According to an embodiment, the electronic device may generate preview image data, based on an image signal of a frame output from the camera module. The electronic device may display the preview image data through the camera application. The electronic device may update the displayed preview image data at a predetermined time interval.

Referring to FIG. 7, the camera module may output an image signal of a capture frame in response to being in a capture mode. The camera module may obtain the capture frame at a predetermined time interval, based on the capture mode being identified. For example, the camera module may identify the capture mode in response to receiving a capture image request from a camera application. For example, the camera module may receive the capture image request from the camera application, based on a user input for obtaining a still image or a moving image. For example, the camera module may receive a capture image request from the camera application, based on a user input for obtaining an image to which a function (e.g., multi-frame synthesis) supported by the electronic device is applied.

According to an embodiment, the camera module may obtain a number of capture frames corresponding to the number of capture image requests received from the camera application. For example, based on the user input for obtaining the still image, the camera module may obtain one capture frame corresponding to one capture image request received from the camera application. For example, based on the user input for obtaining the image to which multi-frame synthesis is applied, the camera module may obtain a number of capture frames corresponding to the number of frames used for multi-frame synthesis. For example, based on the user input for obtaining the moving image, the camera module may obtain the capture frame at the predetermined time interval until a user input for stopping the capturing of the moving image is received in accordance with the capture image request received from the camera application.

According to an embodiment, the capture frame output from the image sensor may be a frame composed of a non-Bayer pattern. For example, the image sensor may output an image signal (e.g., raw image data) of the frame composed of the non-Bayer pattern, based on being in a high-resolution capture mode. That is, the image sensor may output an image signal of the frame composed of the non-Bayer pattern, by using each of output values of photosensitive elements as a pixel value of a pixel corresponding to each of the photosensitive elements. For example, the image sensor may output an image signal (e.g., raw image data) of the frame composed of the non-Bayer pattern, based on being in a crop capture mode. For example, the image sensor may output the image signal of the frame composed of the non-Bayer pattern, by using output values of 12.5 million photosensitive elements located at a center of the image sensor among 50 million photosensitive elements as pixel values of pixels respectively corresponding to the photosensitive elements.

Referring to FIG. 7, the camera module may obtain a preview frame after completing acquisition of the capture frame. For example, after completing the acquisition of the capture frame, the camera module may change a frame acquisition mode from a capture mode to a preview mode. For example, based on the electronic device identifying that the capture image has been obtained through the camera application, the camera module may operate in the preview mode by receiving a preview image request from the camera application. The camera module may obtain the preview frame again in response to receiving the preview image request. The preview frame output after completing the acquisition of the capture frame may be the frame composed of the Bayer pattern.

According to an embodiment, the electronic device may process an image signal of a frame output from the camera module. For example, since fast signal processing is required for a preview image, the electronic device may output raw image data composed of the 12.5Mp Bayer pattern from the image sensor and apply the raw image data to an ISP implemented in hardware. For example, since a capture image is required to be a high-quality image, the electronic device may perform image processing by outputting a raw image composed of a tetra pattern from the image sensor. For example, since fast signal processing is required for a draft image, the electronic device may convert first raw image data composed of the tetra pattern into second raw image data composed of the Bayer pattern and apply the second raw image data to the ISP implemented in hardware.

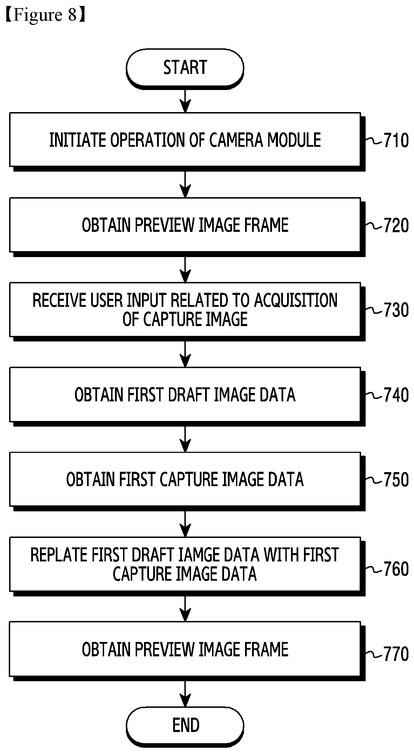

FIG. 8 is a flowchart illustrating a method of operating of an electronic device according to an embodiment. Operations of the electronic device illustrated in FIG. 8 may be performed by a processor (e.g., the processor 320 of FIG. 4) performing a computation or controlling components of the electronic device. The electronic device performing the operations of FIG. 8 may obtain an image signal by using an image sensor including a CFA composed of a non-Bayer pattern. The electronic device may generate a draft image and a capture image by using image signals of the same frame.

According to an embodiment, in operation 710, the electronic device may initiate an operation of a camera module. For example, the electronic device may execute a camera application to provide the camera module with a request to initiate the operation of the camera module. The camera module may control the image sensor to obtain frames, based on the request to initiate the operation.

According to an embodiment, in operation 720, the electronic device may obtain a preview frame. For example, the electronic device may obtain a preview image frame by controlling the camera module through the camera application. For example, the camera module may obtain the preview frame, based on being in a preview mode. For example, the camera module may obtain the preview frame through the image sensor in response to a preview image request received from the camera application. The camera module may identify the request to initiate the operation received in operation 710 as the preview image request. The camera module may obtain the preview frame in response to receiving the request to initiate the operation. The electronic device may obtain the preview frame at a predetermined time interval.

According to an embodiment, the electronic device may obtain an image signal of a frame composed of a Bayer pattern. For example, the electronic device may obtain the image signal of the frame composed of the Bayer pattern, by binning output values of photosensitive elements of the image sensor. The electronic device may obtain preview image data by applying the obtained image signal to an ISP. The electronic device may display the preview image data through the camera application. The electronic device may update the displayed preview image data at a predetermined time interval.

According to an embodiment, in operation 730, the electronic device may receive a user input related to acquisition of a capture image. For example, the electronic device may receive a user input for obtaining a still image and/or a moving image through the camera application. For example, the electronic device may receive a user input for obtaining an image to which a function (e.g., multi-frame synthesis) supported by the electronic device is applied. The electronic device may operate in a capture mode in response to the user input.

According to an embodiment, the electronic device may obtain a capture frame in response to the user input. For example, the electronic device may obtain the capture frame, based on operating in the capture mode. For example, based on a capture image request received from the camera application, the electronic device may obtain a number of frames required for multi-frame synthesis and set a reference frame.

According to an embodiment, an image signal of the capture frame may be an image signal composed of the non-Bayer pattern. For example, the electronic device may obtain the image signal of the capture frame composed of the non-Bayer pattern by using each of output values of photosensitive elements as a pixel value of a pixel corresponding to each of the photosensitive elements. For example, the electronic device may output the image signal of the capture frame composed of the non-Bayer pattern, by using output values of a predetermined number of photosensitive elements located at a center of the image sensor among the photosensitive elements as pixel values.

According to an embodiment, in operation 740, the electronic device may obtain first draft image data. The electronic device may display the obtained first draft image data so that a user is allowed to quickly check a captured subject. For example, the electronic device may display the first draft image data on at least a portion of the camera application. For example, the electronic device may display the first draft image data on at least a portion of a screen of the electronic device in response to a user input for checking the first draft image data. The electronic device may store the first draft image data in the electronic device.

For example, the electronic device may obtain draft image data by using the image signal of the capture frame. For example, the electronic device may obtain the draft image data by using an image signal of a frame set as a reference frame. For example, since fast signal processing is required for a draft image, the electronic device may obtain the draft image data by applying the image signal of the capture frame to an ISP. For example, the electronic device may convert a first image signal of the capture frame composed of the non-Bayer pattern into a second image signal composed of the Bayer pattern, by performing a computation (e.g., binning or remosaicking) on the first image signal, and may apply the second image signal to the ISP.

According to an embodiment, in operation 750, the electronic device may obtain first capture image data. For example, the electronic device may obtain capture image data by using the image signal of the capture frame. For example, since a capture image is required to have high image quality, the electronic device may perform image processing by outputting raw image data composed of a tetra pattern from the image sensor. For example, the electronic device may use a processor (e.g., 320 of FIG. 4) to obtain the capture image data by performing computations (e.g., demosaicking, a computation for adjusting white balance, contrast, and saturation values, noise reduction, tone mapping, and edge enhancement) on the image signal of the capture frame. For example, the electronic device may use the processor (e.g., 320 of FIG. 4) to obtain a capture image by performing multi-frame synthesis. The processor may include at least one of an AP, a CPU, a GPU, and an NPU. For example, the electronic device may use the processor (e.g., 320 of FIG. 4) to align capture frames obtained for multi-frame synthesis, generate a blending map, and synthesize the aligned frames. The electronic device may perform computations (e.g., demosaicking, a computation for adjusting white balance, contrast, and saturation values, noise reduction, tone mapping, and edge enhancement) on the synthesized frames, thereby obtaining capture image data subjected to the multi-frame synthesis. For example, the electronic device may perform demosaicking on each of the capture frames obtained for the multi-frame synthesis and then align and synthesize the frames. The electronic device may obtain capture image data by performing computations (e.g., noise reduction, tone mapping, and edge enhancement) on the synthesized frames.

According to an embodiment, in operation 760, the electronic device may replace the first draft image data with first capture image data. For example, the electronic device may overwrite the first draft image data stored in the electronic device with the first capture image data obtained in operation 750. For example, the electronic device may replace the first draft image data displayed on at least a portion of the camera application with the first capture image data and display the first capture image data.

According to an embodiment, in operation 770, the electronic device may obtain a preview image frame. For example, the electronic device may operate in a preview mode in response to identifying that a capture frame has been obtained. For example, the electronic device may operate in the preview mode in response to identifying that first capture image data has been obtained. For example, the electronic device may operate in the preview mode in response to identifying that a number of frames required for multi-frame synthesis has been obtained. The electronic device may obtain a preview frame in response to operating in the preview mode. The electronic device may obtain the preview frame until an additional request (e.g., a capture image request) is received from the camera application or until no request is received due to termination of the camera application. The electronic device may generate preview image data by using the preview frame. The electronic device may display the preview image data. For example, the electronic device may display the preview image data on at least a portion of the camera application. The electronic device may update the displayed preview image data at a predetermined time interval. Operation 770 may be analogously applied with the operation of the electronic device described above with reference to operation 720, and thus redundant descriptions are omitted.

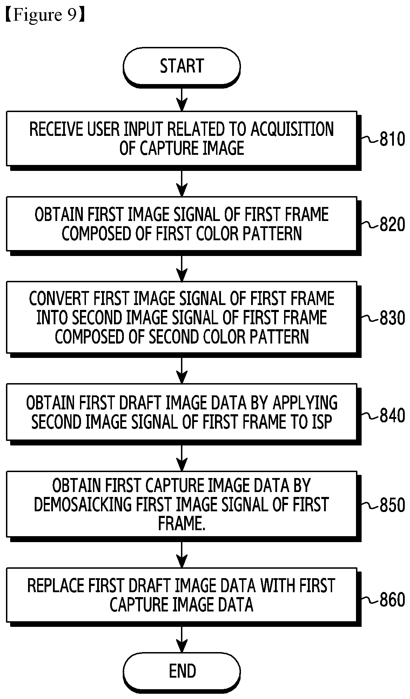

FIG. 9 is a flowchart illustrating a method of operating an electronic device according to an embodiment. Operations of the electronic device illustrated in FIG. 9 may be performed by a processor (e.g., the processor 320 of FIG. 4) performing a computation or controlling components of the electronic device. The operations of FIG. 9 may be related to operations 730 to 760 of FIG. 8. The electronic device performing the operations of FIG. 9 may obtain an image signal by using an image sensor including a CFA composed of a non-Bayer pattern. The electronic device may generate a draft image and a capture image by using image signals of the same frame.

According to an embodiment, in operation 810, the electronic device may receive a user input related to acquisition of a capture image. For example, the electronic device may receive, through a camera application, a user input for obtaining a still image, a moving image, and/or an image to which a function (e.g., multi-frame synthesis) supported by the electronic device is applied. The electronic device may operate in a capture mode in response to the user input. Operation 810 may be analogously applied with the operation of the electronic device described above with reference to operation 730 of FIG. 8, and thus redundant descriptions are omitted.

According to an embodiment, in operation 820, the electronic device may obtain a first image signal of a first frame composed of a first color pattern. For example, the electronic device may obtain the first image signal of the first frame composed of the non-Bayer color pattern (e.g., a tetra pattern, a nona pattern, or a hexadeca pattern) output from the image sensor. For example, the electronic device may obtain an image signal (e.g., raw image data) of the frame composed of the non-Bayer pattern, which is output by the image sensor by using output values of photosensitive elements as pixel values of pixels corresponding to the respective photosensitive elements. For example, the electronic device may obtain an image signal of a capture frame composed of the non-Bayer pattern by using each of output values of photosensitive elements as a pixel value of a pixel corresponding to each of the photosensitive elements. For example, the electronic device may obtain the image signal of the capture frame composed of the non-Bayer pattern by using output values of a predetermined number of photosensitive elements located at a center of the image sensor among the photosensitive elements as pixel values.

According to an embodiment, in operation 830, the electronic device may convert the first image signal of the first frame into a second image signal of the first frame composed of a second color pattern. For example, the electronic device may convert the first image signal composed of the non-Bayer color pattern into the second image signal composed of a Bayer color pattern. For example, the electronic device may obtain the second image signal by binning or remosaicking the first image signal. For example, the electronic device may obtain the second image signal by binning the first image signal of the capture frame composed of the non-Bayer pattern, in which each of output values of photosensitive elements is used as a pixel value of a pixel corresponding to each of the photosensitive elements. For example, the electronic device may obtain the second image signal by remosaicking the first image signal of the capture frame composed of the non-Bayer pattern, in which output values of a predetermined number of photosensitive elements located at a center of the image sensor are used as pixel values.

According to an embodiment, in operation 840, the electronic device may obtain first draft image data by applying the second image signal of the first frame to an ISP. For example, since a draft image requires fast signal processing, the electronic device may obtain draft image data by applying the second image signal obtained in operation 830 to the ISP. The ISP may be a hardware processor designed to process an image signal composed of the Bayer pattern. According to an embodiment, obtaining the draft image data by applying the second image signal to the ISP may include generating, by the ISP, the draft image data by using the second image signal. For example, obtaining draft image data by applying the second image signal to the ISP may include controlling, by a processor (e.g., the processor 320 of FIG. 4), the ISP so that the ISP generates the draft image data.

According to an embodiment, in operation 850, the electronic device may obtain first capture image data by demosaicking the first image signal of the first frame. For example, the electronic device may use the processor (e.g., 320 of FIG. 4) to obtain capture image data by performing computations (e.g., demosaicking, a computation for adjusting white balance, contrast, and saturation values, noise reduction, tone mapping, and edge enhancement) on the image signal of the capture frame. For example, the electronic device may use the processor (e.g., 320 of FIG. 4) to obtain the capture image by performing multi-frame synthesis. The processor may include at least one of an AP, a CPU, a GPU, and an NPU. Operation 850 may be analogously applied with the operation of the electronic device described above with reference to operation 750 of FIG. 8, and thus redundant descriptions are omitted.

According to an embodiment, in operation 860, the electronic device may replace the first draft image data with the first capture image data. Operation 860 may be analogously applied with the operation of the electronic device described above with reference to operation 760 of FIG. 8, and thus redundant descriptions are omitted.

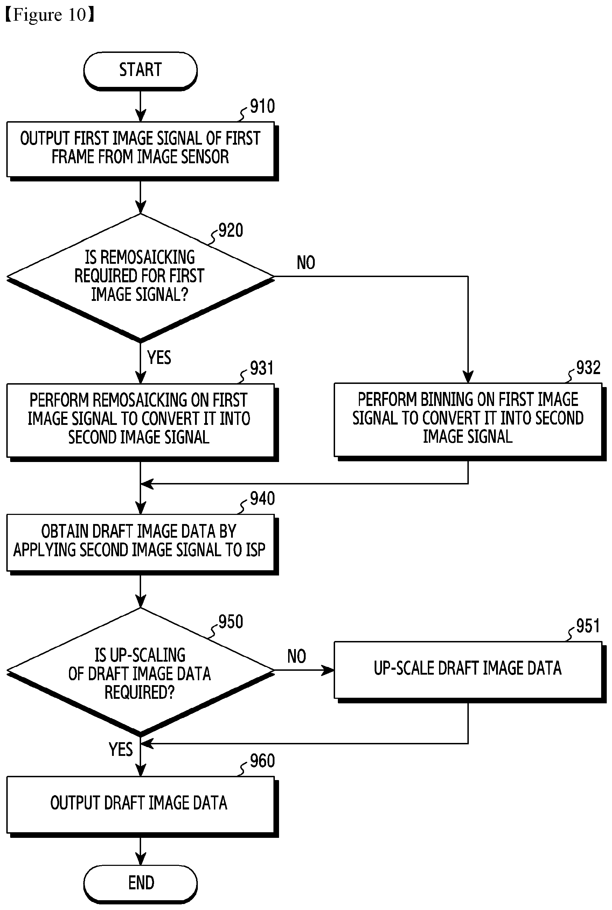

FIG. 10 is a flowchart illustrating a method of operating an electronic device according to an embodiment.

Operations of the electronic device illustrated in FIG. 10 may be performed by a processor (e.g., the processor 320 of FIG. 4) performing a computation or controlling components of the electronic device. The operations of FIG. 10 may be related to operations 730 and 740 of FIG. 8 and operations 820 to 840 of FIG. 9. The electronic device performing the operations of FIG. 10 may obtain an image signal by using an image sensor including a CFA composed of a non-Bayer pattern. The electronic device may generate a draft image and a capture image by using image signals of the same frame.

According to an embodiment, in operation 910, the electronic device may output a first image signal of a first frame from the image sensor. For example, the electronic device may obtain the first image signal of the first frame composed of the non-Bayer color pattern (e.g., a tetra pattern, a nona pattern, or a hexadeca pattern) output from the image sensor. Operation 910 may be analogously applied with the operation of the electronic device described above with reference to operation 820 of FIG. 9, and thus redundant descriptions are omitted.

According to an embodiment, in operation 920, the electronic device may identify whether remosaicking is required for the first image signal. For example, the electronic device may identify whether remosaicking is required for the first image signal by identifying that the first frame has a predetermined number of pixels or more. For example, the electronic device may identify that remosaicking is required for the first image signal, based on identifying that the first frame has fewer than 12 megapixels (12Mp). For example, the electronic device may identify that remosaicking is not required for the first image signal, based on identifying that the first frame has 12Mp or more. For example, the electronic device may identify that remosaicking is required for the first image signal, based on identifying that the first frame is obtained in a crop capture mode. For example, the electronic device may identify that remosaicking is not required for the first image signal, based on identifying that the first frame is obtained in a high-resolution capture mode.

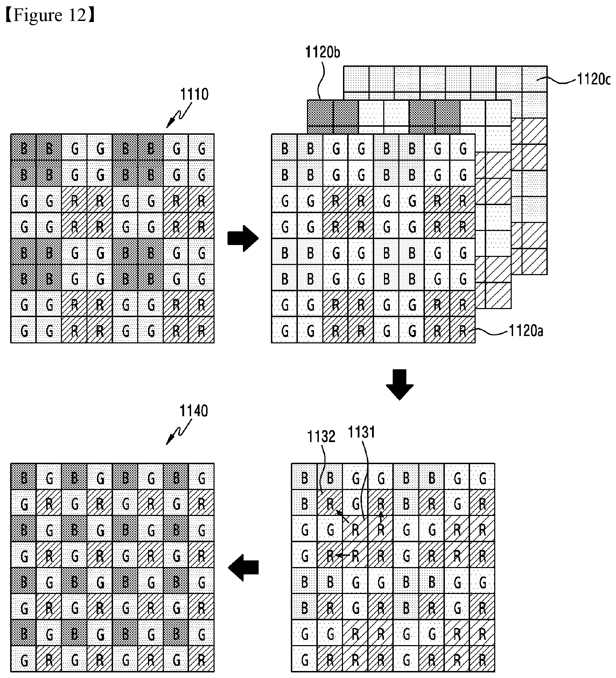

According to an embodiment, in operation 931, the electronic device may convert the first image signal into a second image signal by remosaicking the first image signal. The electronic device may obtain the second image signal composed of a second color pattern (e.g., a Bayer pattern) by remosaicking the first image signal. The number of pixels constituting the first image signal may be equal to the number of pixels constituting the second image signal. For example, the electronic device may perform remosaicking on the first image signal identified as requiring remosaicking in operation 920. For example, the electronic device may perform remosaicking on the first image signal, based on identifying that the first frame has fewer than 12 12Mp. For example, the electronic device may perform remosaicking on the first image signal, based on identifying that the first frame is obtained in the crop capture mode. A method in which the electronic device performs remosaicking will be described in detail below with reference to FIG. 12.

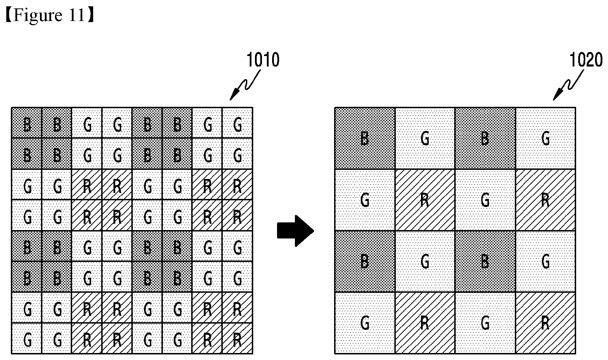

According to an embodiment, in operation 932, the electronic device may convert the first image signal into the second image signal by binning the first image signal. The electronic device may obtain the second image signal composed of the second color pattern (e.g., the Bayer pattern) by binning the first image signal. The number of pixels constituting the first image signal may be a multiple of the number of pixels constituting the second image signal. For example, the first image signal may have 50 megapixels (50Mp), and the second image signal may have 12.5 megapixels (12.5Mp). The electronic device may bin the first image signal identified as not requiring remosaicking in operation 920. For example, the electronic device may bin the first image signal, based on identifying that the first image signal has 50Mp or more. For example, the electronic device may bin the first image signal, based on identifying that the first frame is obtained in a high-resolution capture mode. A method in which the electronic device performs binning will be described in detail below with reference to FIG. 11.

According to an embodiment, in operation 940, the electronic device may obtain draft image data by applying the second image signal to an ISP. The ISP may be a hardware processor designed to process an image signal composed of the second color pattern (e.g., the Bayer pattern). The electronic device may quickly obtain draft image data by applying the second image signal composed of the second color pattern to the ISP. For example, the ISP may output the draft image data by demosaicking the second image signal.

According to an embodiment, in operation 950, the electronic device may identify whether up-scaling of the draft image data is required. For example, the electronic device may identify whether up-scaling of the draft image data is required, based on identifying that the draft image data has a predetermined number of pixels or more. For example, the electronic device may identify that up-scaling of the draft image data is required, based on identifying that the draft image data has fewer than 12 megapixels (12Mp). For example, the electronic device may identify that up-scaling of the draft image data is required, based on metadata of the draft image data. The metadata of the draft image data may include information related to a capture mode of an image signal used to generate the draft image data and/or information related to a computation applied to the image signal. For example, the electronic device may identify whether up-scaling of the draft image data is required, based on information indicating that the second image signal used to generate the draft image data included in the metadata is generated by a binning computation. For example, the electronic device may identify whether up-scaling of the draft image data is required, based on information indicating that the first image signal used to generate the draft image data included in the metadata is obtained in the crop capture mode.

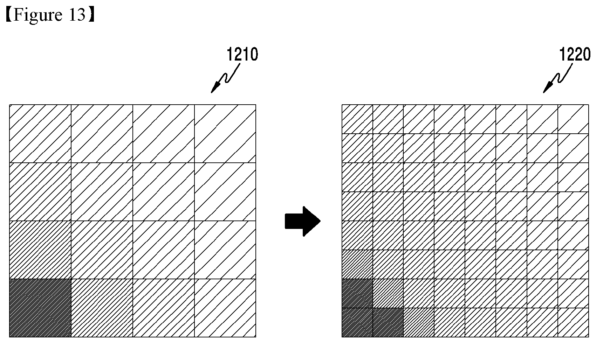

According to an embodiment, in operation 951, the electronic device may up-scale the draft image data. For example, the electronic device may up-scale the draft image data, based on identifying that the draft image data has fewer than a predetermined number of pixels. For example, the electronic device may up-scale the draft image data, based on identifying that the draft image data has fewer than 12 megapixels (12Mp). For example, the electronic device may up-scale the draft image data, based on metadata of the draft image data. For example, the electronic device may up-scale the draft image data, based on information indicating that the second image signal used to generate the draft image data included in the metadata is generated by a binning computation. For example, the electronic device may up-scale the draft image data, based on information indicating that the first image signal used to generate the draft image data included in the metadata is obtained in the crop capture mode. A method in which the electronic device performs up-scaling will be described in detail below with reference to FIG. 13.

According to an embodiment, in operation 960, the electronic device may output the draft image data. For example, the electronic device may display the draft image data on at least a portion of a camera application. For example, the electronic device may display the draft image data on a gallery application.

According to an embodiment, the electronic device may replace the draft image data with capture image data corresponding to the draft image data.

FIG. 11 is a diagram conceptually illustrating conversion of a color pattern of an image signal, according to an embodiment. Referring to FIG. 11, the electronic device may convert an image signal 1010 including color information of a non-Bayer pattern (e.g., a tetra pattern, a nona pattern, or a hexadeca pattern) into an image signal 1020 including color information of a Bayer pattern. The electronic device may convert the image signal 1010 including color information of the non-Bayer pattern, obtained through an image sensor including a CFA composed of the non-Bayer pattern, into the image signal 1020 including color information of the Bayer pattern. For example, the electronic device may generate and output the image signal 1020 including color information of the Bayer pattern from the image signal 1010 including color information of the non-Bayer pattern in response to a preview mode. For example, the electronic device may generate and output the image signal 1020 including color information of the Bayer pattern from the image signal 1010 including color information of the non-Bayer pattern to obtain a draft image.

According to an embodiment, the image sensor may generate the image signal 1020 including color information of the Bayer pattern by using a computation unit (e.g., 417 of FIG. 5) to perform a computation on the image signal 1010 including color information of the non-Bayer pattern, which is output from photosensitive elements corresponding to a CFA composed of the non-Bayer pattern. For example, the computation unit (e.g., 417 of FIG. 5) may generate the image signal 1020 including color information of the Bayer pattern by performing a computation of binning, summing, or remosaicking on output values output from the photosensitive elements.

According to an embodiment, the electronic device may generate the image signal 1020 including color information of the Bayer pattern by using an ISP (e.g., 260 of FIG. 3) to perform the computation on the image signal 1010 including color information of the non-Bayer pattern, which is output from the image sensor. For example, the ISP (e.g., 260 of FIG. 3) may generate the image signal 1020 including color information of the Bayer pattern by performing the computation of binning, summing, or remosaicking on the image signal 1010 including color information of the non-Bayer pattern, which is output from the image sensor.

According to an embodiment, the electronic device may generate the image signal 1020 including color information of the Bayer pattern by using a processor (e.g., 320 of FIG. 4) to perform the computation on the image signal 1010 including color information of the non-Bayer pattern, which is output from the image sensor. For example, the processor (e.g., 320 of FIG. 4) may generate the image signal 1020 including color information of the Bayer pattern by performing the computation of binning, summing, or remosaicking on the image signal 1010 including color information of the non-Bayer pattern, which is output from the image sensor. The processor may include an AP, a CPU, a GPU, and an NPU.

FIG. 12 is a drawing conceptually illustrating conversion of a color pattern of an image signal, according to an embodiment.

Referring to FIG. 12, an electronic device may convert an image signal 1110 including color information of a non-Bayer pattern (e.g., a tetra pattern, a nona pattern, or a hexadeca pattern) into an image signal 1140 including color information of a Bayer pattern.

For example, the electronic device may convert the image signal 1110 including color information of the non-Bayer pattern into the image signal 1140 including color information of the Bayer pattern by using a processor (e.g., 320 of FIG. 4) to perform remosaicking on the image signal 1110. The remosaicking may include an operation of changing a color order to convert a pattern and estimating values of changed colors. The processor may include an AP, a CPU, a GPU, an NPU, and an ISP.

According to an embodiment, the electronic device may obtain the first image signal 1110 including color information of the non-Bayer pattern, which is output from an image sensor. For example, the electronic device may obtain an image signal including color information of the non-Bayer pattern, which is generated by the image sensor including a CFA composed of the non-Bayer pattern, by using output values of photosensitive elements.

According to an embodiment, the electronic device may identify, from the first image signal 1110, an image signal including pixels including identical color information. For example, the electronic device may identify pixels 1120a including color information of red from the first image signal 1110. The electronic device may identify pixels 1120b including color information of blue from the first image signal 1110. The electronic device may identify pixels 1120c including color information of green from the first image signal 1110.

According to an embodiment, the electronic device may adjust pixel values of pixels of the first image signal 1110, based on respective positions of the pixels 1120a, 1120b, and 1120c including color information. For example, the electronic device may adjust pixel values of pixels of the first image signal 1110 to correspond to the Bayer pattern. For example, the electronic device may adjust the pixel values of pixels of the first image signal 1110 by changing a pixel value of a second pixel 1132 including color information of green to a pixel value of a first pixel 1131 including color information of red so as to correspond to the Bayer pattern. The electronic device may obtain a second image signal 1140 including color information of the Bayer pattern by adjusting the pixel values of the pixels of the first image signal 1110.

According to an embodiment, the electronic device may convert the first image signal 1110 including color information of the non-Bayer pattern into the second image signal 1140 including color information of the Bayer pattern by using an artificial intelligence model trained to perform remosaicking on the image signal including color information of the non-Bayer pattern, based on color information of the Bayer pattern. For example, the electronic device 101 may perform a neural network computation corresponding to the artificial intelligence model by using at least one of an AP, a CPU, a GPU, an NPU, an ISP, and a peripheral device. The artificial intelligence model may be generated by learning first raw image data including color information of the non-Bayer pattern, second raw image data including color information of the Bayer pattern obtained by converting the first raw image data, and/or an image (i.e., a ground truth (GT) image) corresponding to the second raw image data.

FIG. 13 is a drawing conceptually illustrating up-scaling of image data, according to an embodiment.

Referring to FIG. 13, an electronic device may use a processor (e.g., 320 of FIG. 4) to up-scale first image data 1210 having a first resolution into second image data 1220 having a second resolution. The processor may include an AP, a CPU, a GPU, an NPU, and an ISP. For example, the electronic device may use at least one of a nearest neighbor algorithm, a bilinear algorithm, a bicubic algorithm, a Lanczos algorithm, a spline curve algorithm, and a next generation up-scaling (NGU) algorithm to perform up-scaling on the first image data 1210. For example, the electronic device may use an artificial intelligence model trained to up-scale image data, so that a first image signal 1110 having the first resolution is up-scaled to obtain a second image signal 1140.

According to an embodiment, the electronic device may up-scale the first image data generated by binning values output from some of photosensitive elements of the image sensor. For example, the electronic device may obtain, from the image sensor, the first image signal including color information of a 12.5Mp non-Bayer pattern through a crop capture mode which uses only some output values of 50 million photosensitive elements. The electronic device may obtain the second image signal including color information of a 3.1Mp Bayer pattern by binning pixel values constituting the first image signal including color information of the 12.5Mp non-Bayer pattern. The electronic device may obtain a third image signal including color information of a 12.5Mp Bayer pattern by performing up-scaling on the second image signal including color information of the 3.1Mp Bayer pattern.

According to the disclosed embodiment, the electronic device may obtain a capture image without a difference in composition from a draft image.

The electronic device 101 according to an embodiment may include the CFA 413 including a first color pattern, the image sensor 230 configured to generate an image signal by using light passing through the CFA, the image signal processor 260 configured to process an image signal composed of a second color pattern, the display 160 or 360, the memory 339 configured to store instructions, and the processor 320 configured to execute the instructions. The electronic device 101 may receive a user input related to acquisition of a capture image. The electronic device 101 may obtain a first image signal of a first frame composed of the first color pattern through the image sensor, based on the user input. The electronic device 101 may convert the first image signal of the first frame into a second image signal of the first frame composed of the second color pattern. The electronic device 101 may obtain first draft image data by applying the second image signal of the first frame to the image signal processor. The electronic device 101 may obtain first capture image data by demosaicking the first image signal of the first frame. The electronic device 101 may replace the first draft image data with the first capture image data.

According to an embodiment, the instructions, when executed by the processor, may cause the electronic device to display the first draft image data in response to the user input. The instructions, when executed by the processor, may cause the electronic device to display the first capture image data by replacing the first draft image data with the first capture image data.

According to an embodiment, the instructions, when executed by the processor, may cause the electronic device to set the first frame as a reference frame, based on a user input for setting a multi-frame synthesis function, and obtain an image signal of a second frame. The instructions, when executed by the processor, may cause the electronic device to generate the first capture image data by synthesizing the image signal of the second frame with the image signal of the first frame, based on the first image, and demosaicking the synthesized image signal.

According to an embodiment, the instructions, when executed by the processor, may cause the electronic device to convert the first image signal of the first frame into the second image signal of the first frame by binning pixel values constituting the first image signal of the first frame. The instructions, when executed by the processor, may cause the electronic device to obtain the first draft image data by up-scaling image data output from the image signal processor.

According to an embodiment, the instructions, when executed by the processor, may cause the electronic device to obtain the first image signal of the first frame output from all of photosensitive elements constituting the image sensor, based on a user input for setting a high-resolution capture mode. The first image signal of the first frame may be composed of the first color pattern.

According to an embodiment, the instructions, when executed by the processor, may cause the electronic device to obtain the first image signal of the first frame output from preset photosensitive elements among photosensitive elements constituting the image sensor, based on a user input for setting a zoom function to a preset magnification value. The first image signal of the first frame may be composed of the first color pattern.

According to an embodiment, the instructions, when executed by the processor, may cause the electronic device to convert the first image signal of the first frame into the second image signal of the first frame by performing remosaicking on the first image signal of the first frame.

According to an embodiment, the instructions, when executed by the processor, may cause the electronic device to display preview image data before receiving the user input related to acquisition of the capture image. The preview image data may be obtained by applying, from the image sensor to the image signal processor, a second image signal of a third frame composed of the second color pattern and generated by converting a first image signal of the third frame composed of the first color pattern.

According to an embodiment, the instructions, when executed by the processor, may cause the electronic device to display preview image data, based on acquisition of the first capture image data. The preview image data may be obtained by applying, from the image sensor to the image signal processor, a second image signal of the second frame composed of the second color pattern and generated by converting a first image signal of the second frame composed of the first color pattern.

According to an embodiment, a method of operating an electronic device may include a CFA including a first color pattern, an image sensor configured to generate an image signal by using light passing through the CFA, and an image signal processor configured to process an image signal composed of a second color pattern. The method of operating the electronic device may include receiving a user input related to acquisition of a capture image. The method of operating the electronic device may include obtaining a first image signal of a first frame composed of the first color pattern through the image sensor, based on the user input. The method of operating the electronic device may include converting the first image signal of the first frame into a second image signal of the first frame composed of the second color pattern. The method of operating the electronic device may include obtaining first draft image data by applying the second image signal of the first frame to the image signal processor. The method of operating the electronic device may include obtaining first capture image data by demosaicking the first image signal of the first frame. The method of operating the electronic device may include replacing the first draft image data with the first capture image data.

According to an embodiment, the obtaining of the first draft image data by the electronic device 101 may include displaying the first draft image data in response to the user input. The replacing of the first draft image data with the first capture image data by the electronic device 101 may include displaying the first capture image data.

According to an embodiment, the receiving of the user input by the electronic device 101 may include receiving a user input for setting a multi-frame synthesis function. The obtaining of the first image signal by the electronic device 101 may include setting the first frame as a reference frame and obtaining an image signal of a second frame. The obtaining of the first capture image data by the electronic device 101 may include synthesizing the image signal of the second frame with the image signal of the first frame, based on the first frame, and demosaicking the synthesized image signal.

According to an embodiment, the converting of the first image signal into the second image signal by the electronic device 101 may include converting the first image signal of the first frame into the second image signal of the first frame by binning pixel values constituting the first image signal of the first frame. The obtaining of the first draft image data by the electronic device 101 may include up-scaling image data output from the image signal processor.

According to an embodiment, the receiving of the user input by the electronic device 101 may include receiving a user input for setting a high-resolution capture mode. The obtaining of the first image signal of the first frame by the electronic device 101 may include obtaining the first image signal of the first frame output from all of photosensitive elements constituting the image sensor. The first image signal of the first frame may be composed of the first color pattern.

According to an embodiment, the receiving of the user input by the electronic device 101 may include receiving a user input for setting a zoom function to a preset magnification value. The obtaining of the first image signal of the first frame by the electronic device 101 may include obtaining the first image signal of the first frame output from preset photosensitive elements among photosensitive elements constituting the image sensor. The first image signal of the first frame may be composed of the first color pattern.

According to an embodiment, the converting of the first image signal to the second image signal by the electronic device 101 may include converting the first image signal of the first frame into the second image signal of the first frame by performing remosaicking on the first image signal of the first frame.

According to an embodiment, the method of operating the electronic device 101 may include displaying preview image data before receiving the user input related to acquisition of the capture image. The preview image data may be obtained by applying, from the image sensor to the image signal processor, a second image signal of a third frame composed of the second color pattern and generated by converting a first image signal of the third frame composed of the first color pattern.

According to an embodiment, the method of operating the electronic device 101 may further include displaying preview image data, based on acquisition of the first capture image data. The preview image data may be obtained by applying, from the image sensor to the image signal processor, a second image signal of the second frame composed of the second color pattern and generated by converting a first image signal of the second frame composed of the first color pattern.

A non-transitory computer-readable recording medium according to an embodiment may be a recording medium storing instructions for controlling an electronic device including a CFA including a first color pattern, an image sensor configured to generate an image signal by using light passing through the CFA, and an image signal processor configured to process an image signal composed of a second color pattern. The recording medium may store an instruction for receiving a user input related to acquisition of a capture image. The recording medium may store an instruction for obtaining a first image signal of a first frame composed of the first color pattern through the image sensor, based on the user input. The recording medium may store an instruction for converting the first image signal of the first frame into a second image signal of the first frame composed of the second color pattern. The recording medium may store an instruction for obtaining first draft image data by applying the second image signal of the first frame to the image signal processor. The recording medium may store an instruction for obtaining first capture image data by demosaicking the first image signal of the first frame. The recording medium may store an instruction for replacing the first draft image data with the first capture image data.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a color filter array including a first color pattern;
an image sensor configured to generate an image signal by using light passing through the color filter array;
an image signal processor configured to process an image signal composed of a second color pattern;
a display;
at least one processor including a processing circuit; and
a memory configured to store instructions,
wherein the instructions, when executed by the processor, cause the electronic device to:
receive a user input related to acquisition of a capture image;
obtain a first image signal of a first frame composed of the first color pattern through the image sensor, based on the user input;
convert the first image signal of the first frame into a second image signal of the first frame composed of the second color pattern;
obtain first draft image data by applying the second image signal of the first frame to the image signal processor;
obtain first capture image data by demosaicking the first image signal of the first frame; and
replace the first draft image data with the first capture image data.

2. The electronic device of claim 1, wherein the instructions, when executed by the processor, cause the electronic device to:
display the first draft image data in response to the user input; and
display the first capture image data by replacing the first draft image data with the first capture image data.

3. The electronic device of claim 1, wherein the instructions, when executed by the processor, cause the electronic device to:
set the first frame as a reference frame, based on a user input for setting a multi-frame synthesis function;
obtain an image signal of a second frame; and
generate the first capture image data by synthesizing the image signal of the second frame with the image signal of the first frame, based on the first image, and demosaicking the synthesized image signal.

4. The electronic device of claim 1, wherein the instructions, when executed by the processor, cause the electronic device to:
convert the first image signal of the first frame into the second image signal of the first frame by binning pixel values constituting the first image signal of the first frame; and
obtain the first draft image data by up-scaling image data output from the image signal processor.

5. The electronic device of claim 1,
wherein the instructions, when executed by the processor, cause the electronic device to obtain the first image signal of the first frame output from all of photosensitive elements constituting the image sensor, based on a user input for setting a high-resolution capture mode, and
wherein the first image signal of the first frame is composed of the first color pattern.

6. The electronic device of claim 1,
wherein the instructions, when executed by the processor, cause the electronic device to obtain the first image signal of the first frame output from predetermined photosensitive elements among photosensitive elements constituting the image sensor, based on a user input for setting a zoom function to a predetermined magnification value, and
wherein the first image signal of the first frame is composed of the first color pattern.

7. The electronic device of claim 6, wherein the instructions, when executed by the processor, cause the electronic device to convert the first image signal of the first frame into the second image signal of the first frame by performing remosaicking on the first image signal of the first frame.

8. The electronic device of claim 1,
wherein the instructions, when executed by the processor, cause the electronic device to display preview image data before receiving the user input related to acquisition of the capture image,
wherein the preview image data is obtained by applying, from the image sensor to the image signal processor, a second image signal of a third frame composed of the second color pattern and generated by converting a first image signal of the third frame composed of the first color pattern.

9. The electronic device of claim 1,
wherein the instructions, when executed by the processor, cause the electronic device to display preview image data, based on acquisition of the first capture image data,
wherein the preview image data is obtained by applying, from the image sensor to the image signal processor, a second image signal of the second frame composed of the second color pattern and generated by converting a first image signal of the second frame composed of the first color pattern.

10. A non-transitory computer-readable recording medium storing instructions for controlling an electronic device comprising a color filter array including a first color pattern, an image sensor configured to generate an image signal by using light passing through the color filter array, and an image signal processor configured to process an image signal composed of a second color pattern, the recording medium comprising instructions for:
receiving a user input related to acquisition of a capture image;
obtaining a first image signal of a first frame composed of the first color pattern through the image sensor, based on the user input;
converting the first image signal of the first frame into a second image signal of the first frame composed of the second color pattern;
obtaining first draft image data by applying the second image signal of the first frame to the image signal processor;
obtaining first capture image data by demosaicking the first image signal of the first frame; and
replacing the first draft image data with the first capture image data.

11. A method of operating an electronic device comprising a color filter array including a first color pattern, an image sensor configured to generate an image signal by using light passing through the color filter array, and an image signal processor configured to process an image signal composed of a second color pattern, the method comprising:
receiving a user input related to acquisition of a capture image;
obtaining a first image signal of a first frame composed of the first color pattern through the image sensor, based on the user input;
converting the first image signal of the first frame into a second image signal of the first frame composed of the second color pattern;
obtaining first draft image data by applying the second image signal of the first frame to the image signal processor;
obtaining first capture image data by demosaicking the first image signal of the first frame; and
replacing the first draft image data with the first capture image data.

12. The method of claim 11,
wherein the obtaining of the first draft image data comprises displaying the first draft image data in response to the user input, and
wherein the replacing of the first draft image data with the first capture image data comprises displaying the first capture image data.

13. The method of claim 11,
wherein the receiving of the user input comprises receiving a user input for setting a multi-frame synthesis function,
wherein the obtaining of the first image signal comprises setting the first frame as a reference frame and obtaining an image signal of a second frame,
wherein the obtaining of the first capture image data comprises:
synthesizing the image signal of the second frame with the image signal of the first frame, based on the first frame; and
demosaicking the synthesized image signal

14. The method of claim 11,
wherein the converting of the first image signal into the second image signal comprises converting the first image signal of the first frame into the second image signal of the first frame by binning pixel values constituting the first image signal of the first frame, and
wherein the obtaining of the first draft image data comprises up-scaling image data output from the image signal processor.

15. The method of claim 11,
wherein the receiving of the user input comprises receiving a user input for setting a high-resolution capture mode,
wherein the obtaining of the first image signal of the first frame comprises obtaining the first image signal of the first frame output from all of photosensitive elements constituting the image sensor, and
wherein the first image signal of the first frame is composed of the first color pattern.
